# EUROPEAN PATENT SPECIFICATION

(11) **EP 1 932 757 B1**
(45) Date of publication and mention of the grant of the patent: **26.10.2016**
(21) Application number: 06026103.9
(22) Date of filing: 15.12.2006
(51) Int. Cl.: B64C 1/14

(54) **Bonded aluminium window frame on fibre metal laminate fuselage skin**
Aluminiumfensterrahmen befestigt an einer Rumpfaussenhaut aus Metallfaserlaminat
Cadre de fenêtre en aluminium fixé sur un revêtement de fuselage en laminé fibre métal

(43) Date of publication of application: 18.06.2008
(73) Proprietor: Airbus Deutschland GmbH, 21129 Hamburg (DE)
(72) Inventor: Pellenkoft, Frederik, 22765 Hamburg (DE); Gennai, Alessandro, 22589 Hamburg (DE)
(74) Representative: Kopf Westenberger Wachenhausen Patentanwälte PartG mbB

(56) References cited:
- EP-A- 1 336 469
- EP-A- 1 647 481
- WO-A-2005/115840
- JP-A- 10 036 139
- US-A- 3 061 490
- US-A- 5 277 384
- US-A1- 2005 247 822

## Description

### Field of the invention

The present invention relates to a window system and a method for manufacturing a window system, and in particular to a window system, wherein a window frame is mounted on a fibre metal laminate skin of for example an aircraft, and a corresponding method for manufacturing the window system.

### Background of the invention

US2005/247822A1, which is considered as the closest prior art document, describes a substantially strong, lightweight load bearing window for use in a mobile platform, for example, an aircraft. The window includes a rim portion having a carbon reinforced resin structure and a transparent portion having a fiberglass reinforced resin structure. A plurality of holes are formed in the rim portion for enabling a plurality of connectors to be inserted therethrough. The rim portion has a smaller cross sectional area (i.e., thickness) than the transparent portion such that the rim portion is adapted to fit behind a skin of an aircraft, the transparent portion is adapted to be flush with the skin of the aircraft. The connectors fix the window to the skin of the aircraft. The window effectively forms a strong, structurally integral portion of the skin.

US3061490A relates broadly to laminated safety glass and more particularly to an improved interlayer material for use in laminated glass glazing units and to a method of preparing the same.

EP1647481A describes a window element for insertion, in particular, into a window opening in an outer skin of an aircraft comprises a cover pane positioned flush with the outer skin. EP1336469A describes a method of manufacturing a stringer for a fuselage skin panel comprises the steps of: preparing a pile of sheet-metal strips bent so as to have a cross-section of given shape, alternating with at least one layer of resin-impregnated fibre, and applying heat and pressure to the pile in a manner such as to cure the resin and set the shape. A composite laminated stringer is thus obtained. In order to manufacture a fuselage panel of composite laminated material, provided with composite laminated stringers, the resin in the stringers is cured simultaneously with the resin which is present between the metal layers of a laminate suitable for forming the outer skin.

US5277384A describes that a quick seal system is used to seal between an aircraft frame and a transparency, such as a canopy, a windshield, or a window. The system includes a fairing seal and a pressure seal. The fairing seal seals between the outer surface of the canopy and the fairing, while the pressure seal seals between the inner surface of the canopy and the aircraft frame. The pressure seal is an elongated strip of material, having an area of increased thickness to provide an increase sealing pressure. The fairing seal is also an elongated strip of material. The fairing seal is generally triangular, having a top surface, an inner surface, and an outer surface. The inner surface abuts the outer surface of the canopy. A pair of extensions form a longitudinal slot on the outer surface of the fairing seal. The upper edge of the fairing is secured in the slot with an adhesive. If desired, the fairing seal and the adhesive may be electrically conductive.

Window belts in pressurized, metallic fuselages with mechanically fastened window frames are typical potential fatigue critical areas due to the reduction of a circumferential net section of the skin and stress concentrations caused by the presence of load transferring fasteners. The increasing demand for more passenger window view and increasing demand to save weight in airframe structures have driven the development of alternative structural solutions for the window frame environment. A stress analysis and strain gauge measurements on full scale tests have shown that mechanically fastened window frames environments are fatigue critical locations.

### Summary of the invention

It would be desirable to provide a window frame environment providing the possibility for more passenger window view and to save weight in airframe structures.

The invention provides a window system as claimed in claim 1 overcoming the drawbacks of the prior art, an aircraft having a one or a plurality of said window systems, a corresponding method for manufacturing a window system as claimed in claim 10, a corresponding programme element for carrying out the method, and a corresponding computer-readable medium.

It should be noted that the following described exemplary embodiments of the invention apply also for the device, the method, the aircraft, the programme element and the computer-readable medium.

According to the present invention, a window system as claimed in claim 1 comprises a fibre metal laminate skin having a mounting surface portion and a window frame having a first flange, which first flange comprises a first side, wherein at least a part of a surface of the first side is form-fitted to the mounting surface portion of the fibre metal laminate skin, and at least a part of the surface of the first side of the first flange and the mounting surface portion of the fibre metal laminate skin are bonded.

A window system may be understood as a combination of a window frame, a mounting environment of the window frame on the skin, a mounting and corresponding elements.

Fibre metal laminates may be a laminar compound of aluminium layers and glass fibre structures, in particular a glass fibre reinforced aluminium. However, it should be noted that fibre metal laminates may also include a carbon fibre structure or a blend of a carbon fibre and glass fibre structure as a reinforcement, or any other fibre being appropriate for reinforcement purposes. Further, fibre metal laminates may also include other metals, in particular light weight metals like titanium etc. It should be noted that fibre metal laminates may also be coated by other metals and materials, depending on the required purposes of the outer layer, for example with respect to environmental impact, which impacts may include climatic or weather impacts as well as impacts due to dust, forced impacts etc. A fibre metal laminate may also be a glare skin

It should be noted that form-fitted means also any fitted structure, in which surfaces are fitted, irrespective whether the surfaces are curved or not. Thus, also two plane-fitted surfaces may be understood as form-fitted.

It should be noted that bonding means also a laminary mounting by for example adhesive or solder or any other appropriate laminary fixation, wherein laminary should be understood as form-fitted. A bonding is therefore a fixation, in which the force transfer takes place via a face. Compared to a punctual fixation of a fastener, a rivet, a screw or the like, where the force transfer takes place via only the lateral cut of the fastener, rivet, the screw or the like, bonding allows to transfer the forces via the form-fitted faces of the two form-fitted elements.

Bonded metallic window frames on metallic skins do not require any load carrying fasteners, therefore drastically reducing the amount of potential fatigue crack initiation locations in the skin and the window frame. A bonded structural connection is also characterized by a good damage tolerance behaviour.

Bonding a mounting surface portion of a fibre metal laminate skin with a surface of a window frame further allows to more efficiently manufacture parts of aircrafts, in particular when the mounting process is also used for other manufacturing steps, so that when mounting a window frame to a fibre metal laminate skin by bonding, this mounting may share for example an autoclaving process step with other mounting by bonding processes, for example of doublers, skins, and stringers. Further, bonding a mounting surface portion of a fibre metal laminate skin with a surface of a window frame reduces the weight due to avoiding fasteners and flange portions which are adapted to be mounted with fasteners. Thus, the full advantage of bonding may be used by combining the bonding of components such as skins, doublers, window frames and stringers. In this way, the bonding technology is also a cost-effective way of manufacturing large fuselage shells. Both, the structural mechanic advantages as well as the cost reducing potential compared to mechanically fastened structures may be achieved by the subject-matter of the invention.

According to an exemplary embodiment of the present invention, the first side of the first flange and the mounting surface of the fibre metal laminate skin sandwich a doubler, and the doubler is bonded to the first side of the first flange and the mounting surface of the fibre metal laminate skin. In other words, the bonding may take place also via an intermediate doubler.

Thus, a reinforced structure may be provided by mounting a doubler reinforcement. Further, the doubler may also be adapted to constitute a form fitting intermediate or sandwiched layer. This may allow an improved equal distribution of forces as well as an improved form fitting.

According to the invention, the first side of the first flange and the mounting surface of the fibre metal laminate skin are adhesively mounted.

Thus, a sufficient mounting may be obtained, in particular, since modern adhesives allow a fast and efficient mounting, as well as a reliable connection between the elements.

It should be noted, that with appropriate materials, also soldering or any other appropriate laminary fixation may be used for bonding a mounting surface portion of the fibre metal laminate skin and the surface of the first side of the first flange. Laminary mounted means a fixation in which the force transfer takes place via a face, compared to a punctual fixation of a fastener, a rivet, a screw or the like, where the force transfer takes place via only the lateral cut of the fastener, the rivet, the screw or the like.

According to an exemplary embodiment of the invention, the first flange further comprises a second side, wherein a surface of the second side is inclined to the surface of the first side, so that the strength of the first flange substantially, continuously declines towards the edge of the first flange.

Thus, it is possible to improve equal distribution of the forces and at the same time to reduce the weight of the window frame. Since no fasteners, screws or rivets are needed for mounting the window frame and the fibre metal laminate skin, no coplanar portions are required for the positioning of the fasteners, rivets or screws. Further, a reduced overlapping width may be achieved since no fasteners have to be used for mounting. No edge distance between the outer fasteners has to be maintained.

According to an exemplary embodiment of the invention, the surface of the second side of the first flange smoothly transits to a surface being continued from the mounting surface portion of the fibre metal laminate skin.

Thus, an optimum equal distribution of the forces can be achieved, as well as a smooth transit between the window frame and the fibre metal laminate skin. This may be of relevance when providing the transit in an environment of a high flow speed of the surrounding medium.

According to an exemplary embodiment of the invention, the mounting surface of the fibre metal laminate skin corresponds to a surface facing the interior of an aircraft.

Thus, it is possible to reduce the impact due to the pressure difference between the aircraft cabin and the outer area of the aircraft cabin, so that the interior overpressure presses the window frame onto the mounting surface, thus avoiding desolvation of a window frame from a fibre metal laminate skin due to the pressure difference.

According to an exemplary embodiment of the invention, the first flange extents away from a window opening such that the flange radially extends into a plane.

According to the invention, the first flange and the fibre metal laminate skin are conductively connected. The conductive connection is at least one rivet, screw or fastener. Further, also a conductive adhesive may be provided allowing to conductively connect the fibre metal laminate skin and the window frame. Conductively connected means to be capable of a sufficiently fast potential equalization after e.g. lightning impact or other charges.

A conductive connection between the window frame and the fibre metal laminate skin allows a sufficiently fast potential equalization due to lightning impact or other charges, so that any potential difference between the skin and the window frame may be avoided. Thus, sparks may be avoided between the window frame and the skin, thus reducing the ignition risk, damages on the surface due to surface discharges, which therefore increases the security for the passengers.

According to an exemplary embodiment of the invention, the window frame further comprises a surface portion which substantially aligns with a surface portion of the fibre metal laminate skin. This surface portion may be provided on a separate flange, which flange may be embedded into the window opening of the skin.

Thus, the outer surface of for example an aircraft may be uniformly designed in order to avoid flow resistance or turbulences due to a high velocity difference between the aircraft and the surrounding atmosphere during a flight.

According to an exemplary embodiment of the invention, the fibre metal laminate skin is a fibre metal laminate fuselage skin of an aircraft.

According to an exemplary embodiment of the invention, an aircraft comprises one or a plurality of window systems according to the invention.

According to invention, there is provided a method as claimed in claim 10 for mounting a window frame and a fibre metal laminate skin, which method includes providing a fibre metal laminate skin having a mounting surface portion, providing a window frame with a first flange, which first flange comprises a first side, wherein at least a part of a surface of the first side is form-fitted to the mounting surface portion of the fibre metal laminate skin, and bonding at least a part of the surface of the first side of the first flange of the window frame with the surface portion of the fibre metal laminate skin.

According to an exemplary embodiment of the invention, there is provided a programme element, which, when being executed by a processor, is adapted to carry out the inventive method.

According to an exemplary embodiment of the invention, there is provided a computer-readable medium having stored thereon an inventive program element.

These and other aspects of the present invention will become apparent from and elucidated with reference to the embodiments described hereinafter.

### Brief description of the drawings

Exemplary embodiments of the present invention will be described in the following with reference to the following drawings.
Fig. 1 illustrates a side view of an aircraft with a plurality of window belts.
Fig. 2 illustrates a window system of the prior art.
Fig. 3 illustrates a window system according to an exemplary embodiment of the invention.
Fig. 4 illustrates a window system according to a further exemplary embodiment of the invention.
Fig. 5 illustrates a window system according to a further exemplary embodiment of the invention.
Fig. 6 illustrates a view of a window system of the prior art.
Fig. 7 illustrates a window system according to an exemplary embodiment of the invention.
Fig.8 illustrates an exemplary embodiment of the inventive method.

### Detailed description of the exemplary embodiments of the invention

It should be noted that in the drawings, same reference numbers illustrate corresponding elements.

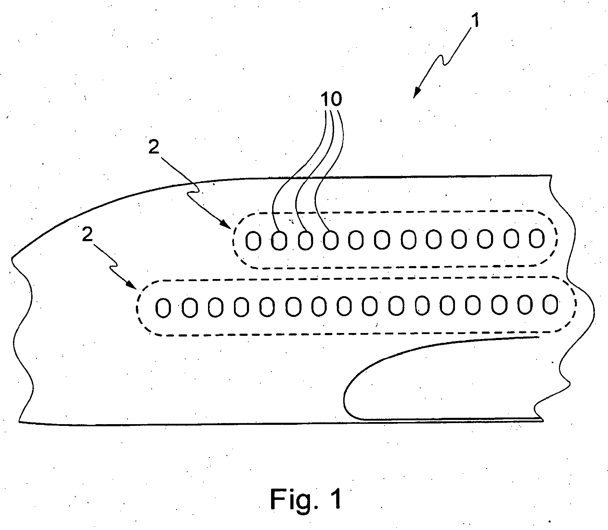

Fig. 1 illustrates a side view of an aircraft 1 having a plurality of window belts. Present developments include aircrafts having a plurality of passenger decks resulting in a plurality of window belts 2, each comprising one or a plurality of window systems 10.

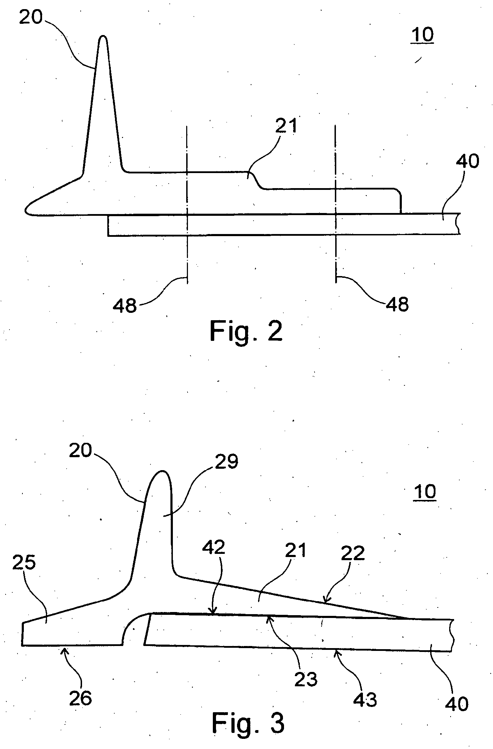

Fig. 2 illustrates a window system 10 of the prior art. The window system 10 of the prior art comprises a window frame 20 and a fibre metal laminate skin 40, wherein the window frame 20 is fixably mounted on the fibre metal laminate skin 40 with a flange 21. The elements for mounting the flange 21 to the fibre metal laminate skin 40 may be for example rivets or fasteners (not shown) on the positions 48. In order to provide an optimum force distribution at the fastener positions, it is necessary to provide coplanar surfaces on the upper side and the lower side of the flange 21, resulting in an either high material strength close to the edge of the flange 21 or to a stepped flange 21.

Fig. 3 illustrates an exemplary embodiment of the invention of a window system 10. The window system 10 comprises a window frame 20 and a fibre metal laminate skin 40, wherein the window frame comprises a flange 21 having two sides 22, 23, one side of which is form-fitted to a mounting surface 42 of the fibre metal laminate skin 40. It should be noted that form-fitted means that at least a part of the surface of the first side 23 contacts the mounting surface 42 of the fibre metal laminate skin 40 via an enlarged area.

In the illustrated embodiment of Fig. 3, the window system 10 further comprises a flange 25 having a surface 26, which is designed such that the surface 26 aligns with a surface 43 of the fibre metal laminate skin 40. In the exemplary embodiment of Fig. 3, the surface portions 26 and 43, and the first surface 23 are directed to the exterior of an aircraft, wherein the flange 29, the second surface 22 of flange 21 and the mounting surface 42 of the fibre metal laminate skin 40 are directed to the interior of an aircraft.

By aligning the surfaces 26 and 43 it is possible to smoothen the transit of the outer skin and the window frame of the airplane in order to avoid turbulences and flow resistance during a flight.

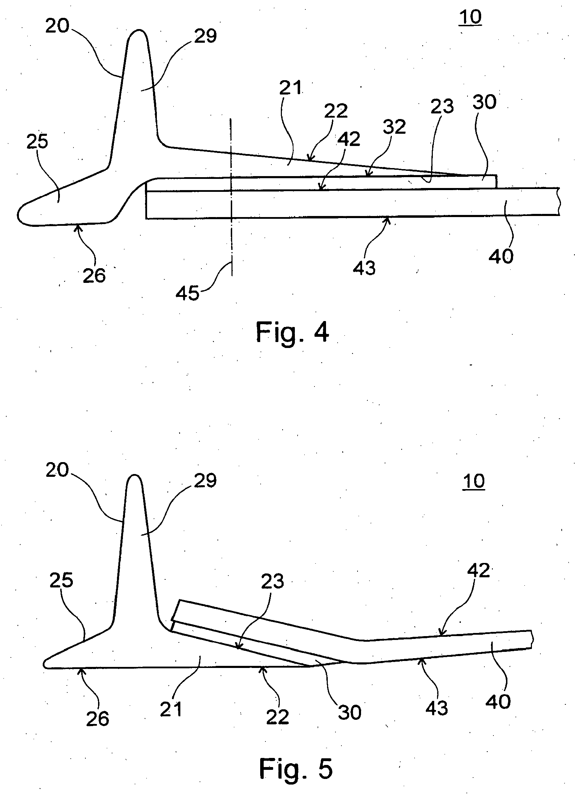

Fig. 4 illustrates a further exemplary embodiment of the present invention.

Fig. 4 illustrates a window system 10 having a window frame 20. The window frame 20 comprises a flange 21 having a first surface 23 and a second surface 22. The first surface 23 is directed to the mounting surface 42 of the fibre metal laminate skin 40. Between the flange 21 and the fibre metal laminate skin 40, there is provided a doubler 30. The doubler serves for strengthen the fibre metal laminate skin 40 in the area close to the edge, to which a window frame 20 is provided. It should be noted that for this exemplary embodiment form-fitted means that the doubler 30 is form-fitted to the mounting surface 42 of the fibre metal laminate skin 40, as well as form-fitted to the first side 23 of the first flange 21 of the window frame 20. In other words, the doubler may also serve as a form-fitting intermediate layer.

The window frame 20 further comprises a second flange 25 having a surface 26. The surface 26 aligns with the surface 43 of the fibre metal laminate skin 40 in order to constitute a smooth outer skin of an aircraft for minimizing turbulences and flow resistance. The window frame 20 further comprises a flange 29 more or less directed towards the interior of an aircraft, wherein the flange 25 and the flange 29 may constitute a bearing for a window glass.

In the exemplary embodiment of Fig. 4, surfaces 26, 43 and 23 are directed to the exterior of an aircraft, wherein surfaces 22 and 42 are directed to the interior of an aircraft. It should be noted that it may be also possible to provide the doubler 30 to the other side of the fibre metal laminate skin 40, where it is appropriate, e.g. for reinforcement purposes.

The window frame 20 and the fibre metal laminate skin 40 may be electrically connected in order to avoid the build up of potential differences between the window frame 20 and the fibre metal laminate skin 40. The electrical conductivity may be achieved by means for example of a rivet, a fastener, a screw or the like, but may also be achieved by means of a conductive adhesive between the window frame 20 and the fibre metal laminate skin 40, in particular on the flange 21, and more particular between the first surface 23 of the flange 21 and at the mounting surface 42 of the fibre metal laminate skin 40, irrespective whether they sandwich a doubler 30 or not. The doubler may be of aluminium or any other appropriate material. It should be noted that the rivet, the fastener, the screw or the like do not have to transfer force loads, and therefore, there is no necessity to provide surfaces 22 and 23 as coplanar surfaces. Thus, the surfaces 23 and 22 of the flange 21 may be inclined to each other in order to find an optimum between the necessary material strength and the weight of the window frame. It should be noted that the flange 21 may be designed such that the surface 22 smoothly transits to the surface, to which the flange 22 is mounted. Thus, no disturbing edges occur, and an optimum force transmission between the fibre metal laminate skin and the window frame is provided. Further, no recesses are present probably leading to a, sedimentation of dust and dirt bearing the risk of corrosion and abrasion.

It should be noted that bonding may be any fixation being based on a lateral fixation in the meaning of adhering two surfaces. Bonding may be achieved for example by an adhesive, the selection of which is within the skilled knowledge, a soldering process where it is appropriate in view of the bonded materials, or a welding process, where it is appropriate with respect to the geometry.

It should be noted that the provision of a rivet, a screw or a fastener or the like on the position 45 does not require the presence of a doubler 30, but may be also provided in an exemplary embodiment as shown in Fig. 3.

Fig. 5 illustrates a further exemplary embodiment of the present invention. Fig. 5 illustrates a window system 10 comprising a window frame 20 and a fibre metal laminate skin 40. In the embodiment according to Fig. 5, the window frame is mounted from the outside of an transport vehicle, e.g. an aircraft, a train or the like, wherein the surfaces 26, 22 and 43 are directed to the outside of an aircraft. In order to achieve a smooth transit between the outer surfaces of the window frame 20 and the outer surface 23 of the fibre metal laminate skin 40, the fibre metal laminate skin may be slightly declined in the window frame region. Further, the window frame may be mounted with or without a doubler 30. Since the window system is not limited to the use in an aircraft, but may be also used in trains or ships, it may be possible to provide a window system capable of being resistant against a higher pressure from the outside of the vehicle.

It should be further noted that also the embodiment according to Fig. 5 may comprise a conductive element for electrically connecting the window frame 20 to the fibre metal laminate skin 40.

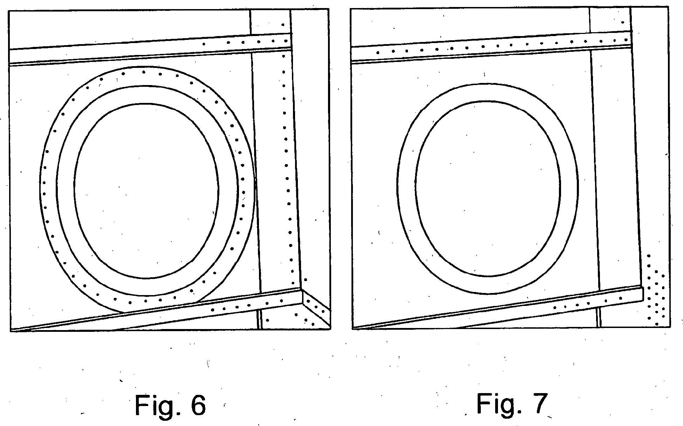

Fig. 6 illustrates a view of the window system according to the prior art using a plurality of rivets, screws or fasteners for mounting the window frame to the skin of an aircraft. To the contrary, Fig. 7 illustrates an exemplary embodiment of the invention, where rivets, screws, fasteners and the like may be avoided for purposes of the force transfer between the window frame and the fibre metal laminate skin due to bonding of the window frame and the fibre metal laminate skin. The outer diameter of the mounting area of the window of the same size may be much lower when bonding the window frame and the fibre metal laminate skin, since an enlarged collar for receiving the rivets, fasteners, screws and the like is not necessary for mounting the window frame to the fibre metal laminate skin.

It should be further noted that Figs. 2, 3, 4 and 5 are not scaled, but Figs. 6 and 7 are scaled.

Further, it should be noted that the scope of the present invention also includes an aircraft having one or a plurality of inventive window systems.

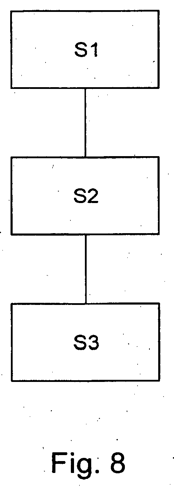

Fig. 8 illustrates a flow diagram of a method according to the present invention. The method for mounting a window frame 20 and a fibre metal laminate skin 40 includes providing S1a fibre metal laminate skin 40 having a mounting surface portion 42, providing S2 a window frame 20 with a first flange 21, which first flange comprises a first side 23, wherein at least a part of a surface of the first side 23 is form-fitted to the mounting surface portion 42 of the fibre metal laminate skin 40, and bonding S3 at least a part of the surface of the first side 23 of the first flange 21 of the window frame 20 with a mounting surface portion 42 of the fibre metal laminate skin 40. S1 and S2 may be also in a reversed order.

The method according to an exemplary embodiment of the present invention may also be carried out, when being executed by a processor, by a programme element. Further, according to an exemplary embodiment, there is provided a computer-readable medium having stored thereon a programme element, which program element is adapted to carry out the inventive method.

The present invention provides an improved design, an easier manufacturing, an improved lightning strike behaviour, a sufficient repairability, and better results in structural mechanical testing and analysis, a non-destructive inspection as well as full scale fatigue testing.

It should be noted that the term "comprising" does not exclude other elements or steps, and the "a" or "an" does not exclude a plurality. Also elements described in association with different embodiments may be combined.

It should be noted that reference signs in the claims shall not be construed as limiting the scope of the claims.

## Claims

1. Window system comprising
a fibre metal laminate skin (40) having a mounting surface portion(42); and
a window frame (20) having a first flange (21), which first flange comprises a first side (23), wherein at least a part of a surface of the first side is form-fitted to the mounting surface portion (42) of the fibre metal laminate skin (40);
wherein at least a part of the surface of the first side (23) of the first flange (21) and the mounting surface portion (42) of the fibre metal laminate skin (40) are bonded, wherein the first side (23) of the first flange (21) and the mounting surface (42) of the fibre metal laminate skin (40) are adhesively mounted;
wherein the window frame (20) and the fibre metal laminate skin (40) are conductively connected by at least one of the group of a rivet, a fastener and a screw (45); and
wherein the adhesive mounting is configured for the purpose of force transfer between the window frame and the fibre metal laminate skin and the conductive connection by at least one of a group of a rivet, a fastener and a screw (45) is not configured for the purpose of force loads transfer between the window frame and the fibre metal laminate skin.

2. Window system of claim 1, wherein the first side (23) of the first flange (21) and the mounting surface (42) of the fibre metal laminate skin (40) sandwich a doubler (30), and the doubler is bonded to the first side (23) of the first flange (21) and the mounting surface (42) of the fibre metal laminate skin (40).

3. Window system of claim 1, wherein the first flange (21) further comprises a second side (22), and a surface of the second side (22) is inclined to the surface of the first side (23), so that the strength of the first flange (21) substantially, continuously declines towards the edge of the first flange (21).

4. Window system of claim 3, wherein the surface of the second side (22) smoothly transits to the surface (32, 42) to which the second side (22) is bonded.

5. Window system of claim 1, wherein the mounting surface (42) of the fibre metal laminate skin (40) corresponds to a surface facing the interior of an aircraft.

6. Window system of claim 1, wherein the first flange is an outer flange extending away from a window opening.

7. Window system of claim 1, wherein the window frame (20) further comprises a surface portion (26) which substantially aligns with a surface portion (43) of the fibre metal laminate skin (40).

8. Window system of claim 1, wherein the fibre metal laminate skin (40) is a fibre metal laminate fuselage skin of an aircraft (1).

9. Aircraft having one or a plurality of window systems (10) of any of claims 1 to 8.

10. Method for mounting a window frame (20) and a fibre metal laminate skin (40), comprising:
providing (S1) a fibre metal laminate skin (40) having a mounting surface portion (42);
providing (S2) a window frame (20) with a first flange (21), which first flange comprises a first side (23), wherein at least a part of a surface of the first side (23) is form-fitted to the mounting surface portion (42) of the fibre metal laminate skin(40);
bonding (S3) at least a part of the surface of the first side (23) of the first flange (21) of the window frame (20) with the mounting surface portion (42) of the fibre metal laminate skin (40), wherein the first side (23) of the first flange (21) and the mounting surface (42) of the fibre metal laminate skin (40) are adhesively mounted;
wherein the window frame (20) and the fibre metal laminate skin (40) are conductively connected by at least one of the group of a rivet, a fastener and a screw (45); and
wherein the adhesive mounting is configured for the purpose of force transfer between the window frame and the fibre metal laminate skin and the conductive connection by at least one of a group of a rivet, a fastener and a screw (45) is not configured for the purpose of force loads transfer between the window frame and the fibre metal laminate skin.

11. Programme element which, when being executed by a processor, is adapted to carry out the method of claim 10.

12. Computer readable medium having stored thereon a programme element of claim 11.

## Patentansprüche

1. Fenstersystem, aufweisend:
eine Fasermetalllaminathaut (40) mit einem Montageflächenteilbereich (42); und
einen Fensterrahmen (20) mit einem ersten Flansch (21), der eine erste Seite (23) aufweist, wobei zumindest ein Teil einer Oberfläche der ersten Seite formschlüssig mit dem Montageflächenteilbereich (42) der Fasermetalllaminathaut (40) ist;
wobei zumindest ein Teil der Oberfläche der ersten Seite (23) des ersten Flansches (21) und der Montageflächenteilbereich (42) der Fasermetalllaminathaut (40) verbunden sind, wobei die erste Seite (23) des ersten Flansches (21) und der Montageflächenteilbereich (42) der Fasermetalllaminathaut (40) klebend befestigt sind;
wobei der Fensterrahmen (20) und die Fasermetalllaminathaut (40) leitend mit mindestens einer aus der Gruppe von einem Niet, einem Befestigungselement und einer Schraube (45) verbunden sind; und
wobei die Klebebefestigung zum Zwecke der Kraftübertragung zwischen dem Fensterrahmen und der Fasermetalllaminathaut konfiguriert ist und die leitende Verbindung durch mindestens einer aus der Gruppe von einem Niet, einem Befestigungselement und einer Schraube (45), nicht zum Zweck der Übertragung von Kraftlasten zwischen dem Fensterrahmen und der Fasermetalllaminathaut konfiguriert ist.

2. Fenstersystem nach Anspruch 1, wobei die erste Seite (23) des ersten Flansches (21) und die Montagefläche (42) der Fasermetalllaminathaut (40) einen Verdoppler (30) einklemmen, und der Verdoppler mit der ersten Seite (23) des ersten Flansches (21) und der Montagefläche (42) der Fasermetalllaminathaut (40) verbunden ist.

3. Fenstersystem nach Anspruch 1, wobei der erste Flansch (21) ferner eine zweite Seite (22) aufweist, und eine Oberfläche der zweiten Seite (22) zu der Oberfläche der ersten Seite (23) geneigt ist, so dass die Stärke des ersten Flansches (21) im Wesentlichen kontinuierlich in Richtung der Kante des ersten Flansches (21) sinkt.

4. Fenstersystem nach Anspruch 3, wobei die Oberfläche der zweiten Seite (22) gleichmäßig zu der Oberfläche (32, 42), an dem die zweite Seite (22) gebunden ist, übergeht.

5. Fenstersystem nach Anspruch 1, wobei die Montagefläche (42) der Fasermetalllaminathaut (40) einer Fläche entspricht, die zum Inneren eines Flugzeugs weist.

6. Fenstersystem nach Anspruch 1, wobei der erste Flansch ein äußerer Flansch ist, der sich von einer Fensteröffnung weg erstreckt.

7. Fenstersystem nach Anspruch 1, wobei der Fensterrahmen (20) ferner einen Oberflächenteilbereich (26) aufweist, der im Wesentlichen mit einem Oberflächenteilbereich (43) der Fasermetalllaminathaut (40) ausgerichtet ist.

8. Fenstersystem nach Anspruch 1, wobei die Fasermetalllaminathaut (40) eine Fasermetalllaminat-Rumpfhaut eines Flugzeugs (1) ist.

9. Flugzeug mit einem oder einer Vielzahl von Fenstersystemen (10) nach einem der Ansprüche 1 bis 8.

10. Verfahren zur Befestigung eines Fensterrahmens (20) und eine Fasermetalllaminathaut (40), aufweisend:
Bereitstellen (S1) einer Fasermetalllaminathaut (40) mit einem Montageflächenteilbereich (42);
Bereitstellen (S2) eines Fensterrahmens (20) mit einem ersten Flansch, der eine erste Seite (23) aufweist, wobei zumindest ein Teil einer Oberfläche der ersten Seite formschlüssig mit dem Montageflächenteilbereich (42) der Fasermetalllaminathaut (40) ist;
Verbinden (S3) von zumindest einem Teil der Oberfläche der ersten Seite (23) des ersten Flansches (21) des Fensterrahmens (20) mit dem Montageflächenteilbereich (42) der Fasermetalllaminathaut (40), wobei die erste Seite (23) des ersten Flansches (21) und die Montagefläche (42) der Fasermetalllaminathaut (40) klebend befestigt sind;
wobei der Fensterrahmen (20) und die Fasermetalllaminathaut (40) leitend mit mindestens einer aus der Gruppe von einem Niet, einem Befestigungselement und einer Schraube (45) verbunden sind; und
wobei die Klebstoffbefestigung zum Zwecke der Kraftübertragung zwischen dem Fensterrahmen und der Fasermetalllaminathaut konfiguriert ist und die leitende Verbindung durch mindestens einer aus der Gruppe von einem Niet, einem Befestigungselement und einer Schraube (45), nicht zum Zweck der Übertragung von Kraftlasten zwischen dem Fensterrahmen und der Fasermetalllaminathaut konfiguriert ist.

11. Programmelement, welches, wenn es durch einen Prozessor ausgeführt wird, angepasst ist, das Verfahren nach Anspruch 10 durchzuführen.

12. Computer lesbares Medium, auf dem ein Programmelement nach Anspruch 11 gespeichert ist.

## Revendications

1. Système de fenêtres comprenant :
une peau de fibres métallique laminé (40) avec une partie de surface de montage (42); et
un cadre de fenêtre (20) avec une première bride (21), la première bride comprend un premier côté (23), dans lequel au moins une partie d'une surface du premier côté est connecté par engagement positif à la partie de surface de montage (42) de la peau de fibres métallique laminé (40);
dans lequel au moins une partie de la surface du premier côté (23) de la première bride (21) est lié avec la partie de surface de montage (42) de la peau de fibres métallique laminé (40), dans lequel le premier côté (23) de la première bride (21) et la surface de montage (42) de la peau de fibres métallique laminé (40) sont montés de manière adhésive;
dans lequel le cadre de fenêtre (20) et la peau de fibres métallique laminé (40) sont reliées de manière conductrice par au moins l'un du groupe d'un rivet, un dispositif de fixation et une vis (45); et
dans lequel le montage d'adhésif est configuré pour objet de transfert de force entre le cadre de fenêtre et la peau de fibres métallique laminé et la liaison conductrice par au moins l'un du groupe d'un rivet, un dispositif de fixation et une vis (45) n'est pas configuré pour transférer des charges de force entre le cadre de fenêtre et la peau de fibres métallique laminé.

2. Système de fenêtres selon la revendication 1, dans lequel le premier côté (23) de la première bride (21) et la surface de montage (42) de la peau de fibres métallique laminé (40) prennent en sandwich un doubleur (30), et le doubler est lié sur le premier côté (23) de la première bride (21) et la surface de montage (42) de la peau de fibres métallique laminé (40).

3. Système de fenêtres selon la revendication 1, dans lequel la première bride (21) comprend en outre un second côté (22), et une surface du second côté (22) est incliné par rapport à la surface du premier côté (23), de sorte que le renfort de la première bride (21), sensiblement, diminue de façon continue vers le bord de la première bride (21).

4. Système de fenêtres selon la revendication 3, dans lequel la surface du second côté (22) transite sans à-coup à la surface (32, 42) auquel le second côté (22) est lié.

5. Système de fenêtres selon la revendication 1, dans lequel la surface de montage (42) de la peau de fibres métallique laminé (40) correspond à une surface tournée vers l'intérieur d'un aéronef.

6. Système de fenêtres selon la revendication 1, dans lequel la première bride est une bride extérieure étendant en partant d'une ouverture de fenêtre.

7. Système de fenêtres selon la revendication 1, dans lequel le cadre de fenêtre (20) comprend en outre une partie de surface (26) qui aligne sensiblement avec une partie de surface (43) de la peau de fibres métallique laminé (40).

8. Système de fenêtres selon la revendication 1, dans lequel la peau de fibres métallique laminé (40) est une peau de fuselage d'un aéronef (1) en fibres métallique laminé.

9. Aéronefs ayant une ou une pluralité de systèmes de fenêtres (10) de l'une quelconque des revendications 1 à 8.

10. Procédé pour le montage d'un châssis de fenêtre (20) et une peau de fibres métallique laminé (40), comprenant :
fournir (S1) d'une peau de fibres métallique laminé (40) avec une partie de surface de montage (42);
fournir (S2) d'un cadre de fenêtre (20) avec une première bride (21), la première bride comprend un premier côté (23), dans lequel au moins une partie d'une surface du premier côté est connecté par engagement positif à la partie de surface de montage (42) de la peau de fibres métallique laminé (40);
lier (S3) d'au moins une partie de la surface du premier côté (23) de la première bride (21) avec la partie de surface de montage (42) de la peau de fibres métallique laminé (40), dans lequel le premier côté (23) de la première bride (21) et la surface de montage (42) de la peau de fibres métallique laminé (40) sont montés de manière adhésive;
dans lequel le cadre de fenêtre (20) et la peau de fibres métallique laminé (40) sont reliées de manière conductrice par au moins l'un du groupe d'un rivet, un dispositif de fixation et une vis (45); et
dans lequel le montage d'adhésif est configuré pour objet de transfert de force entre le cadre de fenêtre et la peau de fibres métallique laminé et la liaison conductrice par au moins l'un du groupe d'un rivet, un dispositif de fixation et une vis (45) n'est pas configuré pour transférer des charges de force entre le cadre de fenêtre et la peau de fibres métallique laminé.

11. Elément de programme qui, lorsqu'il est exécuté par un processeur, est adapté pour exécuter le procédé de la revendication 10.

12. Support lisible par ordinateur sur lequel est stocké un élément de programme selon la revendication 11.
